**Europäisches Patentamt**

**European Patent Office**

**Office européen des brevets**

(19)

(11) Veröffentlichungsnummer : **0 429 841 B1**

(12)

# EUROPÄISCHE PATENTSCHRIFT

(45) Veröffentlichungstag der Patentschrift :
**17.06.92 Patentblatt 92/25**

(51) Int. Cl.$^5$ : **E03F 5/16**

(21) Anmeldenummer : **90120159.0**

(22) Anmeldetag : **20.10.90**

(54) Abscheider für mit Sink- und Schwimmstoffen befrachtete Abwässer.

(30) Priorität : **27.11.89 DE 8913937 U**
**27.11.89 DE 8913936 U**
**27.11.89 DE 8913938 U**

(43) Veröffentlichungstag der Anmeldung :
**05.06.91 Patentblatt 91/23**

(45) Bekanntmachung des Hinweises auf die
Patenterteilung :
**17.06.92 Patentblatt 92/25**

(84) Benannte Vertragsstaaten :
**AT BE CH DE FR LI NL**

(56) Entgegenhaltungen :
**DE-A- 3 330 088**
**DE-A- 3 412 500**
**DE-B- 2 003 565**
**DE-U- 8 801 755**

(73) Patentinhaber : **PASSAVANT-WERKE AG**
**W-6209 Aarbergen 7 (DE)**

(72) Erfinder : **Diefenbach, Günter**
**Limburger Strasse 23a**
**W-6255 Dornburg (DE)**
Erfinder : **Helffenstein, Kurt**
**Pfaffengasse 8a**
**W-6252 Diez (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 429 841 B1

EP 0 429 841 B1

**Beschreibung**

Die Erfindung befaßt sich mit einem Abscheiderbehälter für mit Sink- und Schwimmstoffe befrachtete Abwässer, insbesondere einem Fettabscheider mit vorgeschalteter Schlammfangkammer.

Es wurde bereits vorgeschlagen (DE-A-3 412 500 gemäß dem Oberbegriff des Anspruchs 1), bei Fettabscheidern die Fettschicht vor dem Entleeren mit umgepumptem Kammerinhalt zu verwirbeln und damit die größtenteils erstarrte Schwimmschicht pumpfähig zu machen. Da sich in beiden Kammern Sinkstoffe absetzen und es wenig sinnvoll ist, für jede Kammer eine Pumpe vorzusehen, erhalten die beiden Kammern einen gemeinsamen Sumpf, aus dem die Umwälz- und Entleerpumpe den Schlamm und das Verwirbelungswasser abzieht. Zur Umsteuerung dient ein von der Druckleitung der Pumpe beaufschlagtes Verteilventil, von dem die Zweigleitungen zu den beiden Kammern und die Entleerleitung abgehen.

Die Abscheiderbehälter müssen oftmals unter beengten Platzverhältnissen oberirdisch aufgestellt werden. Je nach Bedienungsseite gibt es Rechts- und Linksausführungen. Dies betrifft auch die Ausrichtung der Entleerungspumpe in Beziehung auf die Längsachse des Beckens. Es ist außerdem sehr wünschenswert, die Abscheidebehälter im Werk bereits weitestgehend vorzumontieren und an die am Einbauort vorhandenen Gegebenheiten anzupassen. Es sollen dazu möglichst wenig neue Montageteile verwendet werden.

Diese Aufgaben werden durch die in Anspruch 1 angegebenen Merkmale gelöst. Die Verwirklichung dieser Idee kann z.B. dadurch erfolgen, daß der Sumpf einen Flansch erhält, der in diesen 4 Stellungen an der Beckenunterseite befestigbar ist. Ein andere Möglichkeit besteht darin, den Sumpf selber mit 4 Anschlußstellungen für die Entleerungspumpe zu versehen. Vorzugsweise wird die Motor-Pumpeneinheit mit liegender, zur Längsachse des Beckens paralleler Achse am Sumpf angeschlossen, wobei zwischen den beiden Sauganschlüssen noch ein Verschlußschieber eingefügt ist, der bei Wartungsarbeiten am Becken geschlossen wird.

Eine solche Ausgestaltung der Sumpf- bzw. Pumpenanschlüsse ermöglicht es, mit einer einheitlichen Beckenführung auszukommen und die Entleerungspumpe jeweils in der gewünschten Stellung zu installieren, in der die Förderrohrleitungen und Umschaltventile sowie deren Betätigungsmittel auf der richtigen Seite verlaufen.

Das Verteilerventil bleibt in beiden Einbauformen unverändert symmetrisch montiert und angeschlossen. Lediglich die Pumpendruckleitung muß je nach Ausführung auf verschiedenen Längsseiten des Abscheiderbehälters hochgeführt werden. Auf Grund der symmetrischen Ausbildung des Verteilventils können aber stets dieselben Rohrleitungs-, Form- und Verbindungsteile verwendet werden. Wenn in besonders vorteilhafter Ausgestaltung der Erfindung ein motorischer Antrieb für das Verteilventil verwendet wird, erübrigt sich ein Umsetzen der Betätigung. Der Antrieb liegt dann zentral oben. Eine Verlegung auf die eine oder andere Seite ist durch Verwendung eines einfachen Winkelgetriebes möglich.

Erfindungsgemäß erhält der Deckel bereits alle zum Betrieb des Abscheiders notwendigen Elemente. Im Falle eines Schadens an den Anbauteilen kann der ganze Deckel abgehoben werden.

Zu den Funktionsteilen des Abscheiders gehört auch eine Fülleitung zum Wiederbefüllen des Abscheidebehälters mit Frischwasser nach der Entsorgung. Erfindunggemäß wird diese Fülleitung ebenfalls oberhalb des Deckels verlegt und im Bereich der Auslauftauchwand so angeordnet, daß ihre Düsen gleichzeitig als Spüleinrichtung für die Auslauftauchwand und die auslaufseitige Behälterwand dienen kann.

Des weiteren wird für die Steuerung der Spül- und Entleerpumpe eine Sonde benötigt, die in den Sumpf der Pumpe ragt. Erfindungsgemäß kann auch diese Sonde an der Decke befestigt und entsprechend fest eingestellt werden.

In den Zeichnungen sind zwei bevorzugte Ausführungsbeispiele der Erfindung im einzelnen dargestellt, und zwar in

Fig. 1 in der Seitenansicht und in
Fig. 2 in der Draufsicht.

Der Abscheidebehälter 1, der durch eine Überfallwand 2 in eine Schlammfangkammer 3 und eine Fettfangkammer 4 unterteilt ist, ist oben durch einen abnehmbaren Deckel 5 mit zwei Kontroll- und Wartungsöffnungen 6, 7 verschlossen. An dem Deckel 5 sind nebeneinander das Spülrohr für den Schlammfang 3, die Pumpendruckleitung 9, das Verteilventil 10 mit Betätigung 11 und das Drehspülerrohr 13 für den Fettfang 4 montiert. Das Pumpendruckrohr 9 verläuft in einer Tasche 14 der Schlammfangkammer 3 nach unten und durchstößt an deren Grund den Schrägboden 15 des Pumpensumpfes 16. Außerhalb des Schrägbodens liegt die Kupplungsstelle 17 zu dem fest verlegten Rohrabschnitt 18, der am Einbauort angeschlossen wird.

In den hinter der auslaufseitigen Tauchwand 19 liegenden Abschnitt ragt von oben ein Rohr 20 zum Wiederbefüllen des Abscheiderbehälters mit Frischwasser. Das Rohrende ist als Düse 21 ausgebildet, die gegen die Tauchwand 19 gerichtet ist. Außerhalb der Tauchwand besitzt das Füllrohr zwei weitere Düsen 22, die gegen die Behälterwand 23 gerichtet sind und diese freispülen.

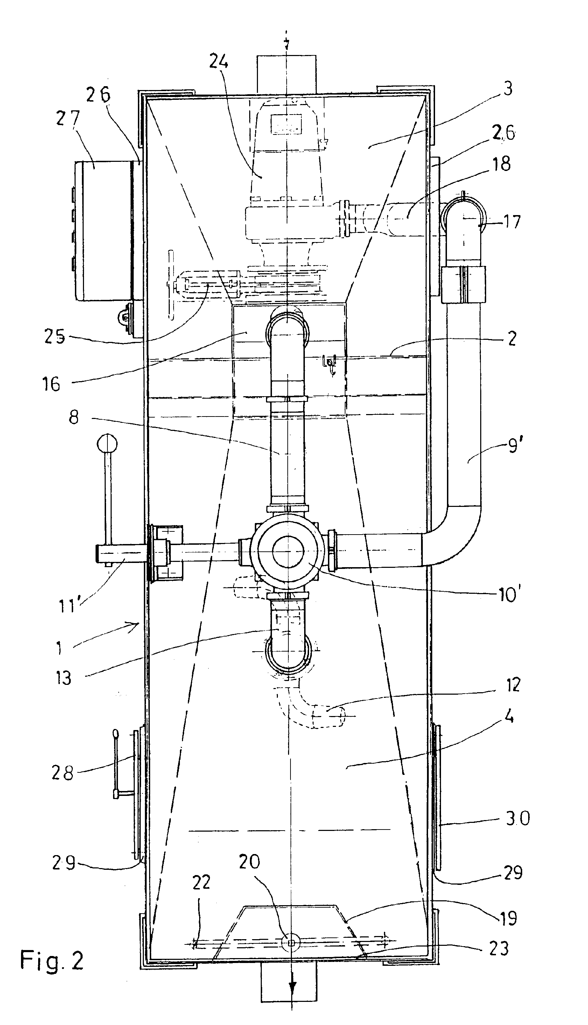

Bei der Ausführungsform nach Fig. 2 ist an dem Pumpensumpf 16, zu dem die geneigten Böden beider

2

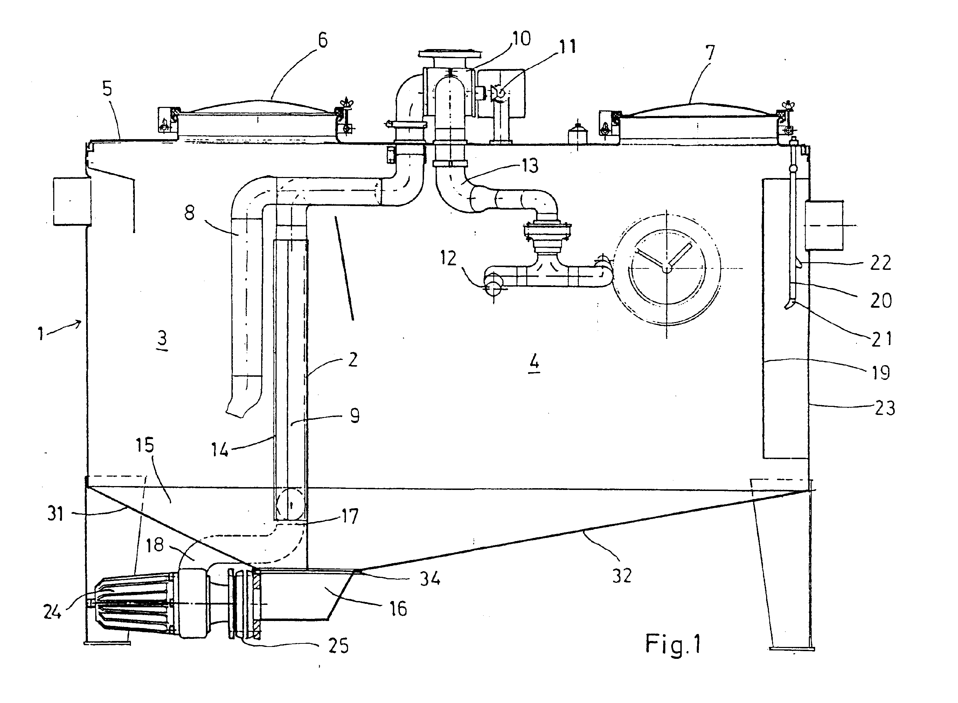

Kammern führen, in Längsrichtung die Pumpeneinheit 24 montiert, deren Druckleitung 9' an der Längsseite des Abscheiderbehälters hochgeführt ist. Der Anschluß am Verteilventil 10 erfolgt waagerecht und symmetrisch zu der Betätigung 11'. Bei Änderung der Ausführung braucht lediglich das Verteilventil um 180° umgesetzt zu werden. Die Pumpendruckleitung 9' verläuft dann auf der anderen Seite. Auch der zwischen Pumpe 24 und Sumpf 16 eingefügte Flachschieber 25 kann versetzt montiert werden, Die Konsole 26 für die Befestigung des Schaltkastens 27 ist genauso auf beiden Seiten vorhanden wie das Sichtfenster 29 mit einem Scheibenwischer 28. Das nicht benutzte Sichtfenster 29 wird durch einen Blinddeckel verschlossen. Die entgegengesetzt geneigten Böden 31, 32 der beiden Kammern bei der Ausführungsform nach Fig. 1 münden in einen trichterförmigen Sumpf 16, der hier durch einen Flansch 34 am Beckenboden befestigt ist. Der Sumpf kann somit in vier Stellungen montiert werden, wodurch die seitliche angesetzte Pumpe 24 ihre Ausrichtung ändert. Der zwischen Pumpe 24 und Sumpf 16 eingefügte Flachschieber 25 ermöglicht das Demontieren der Pumpe bei gefülltem Abscheidebecken.

## Patentansprüche

1. Abscheidebehälter für mit Sink- und/oder Schwimmstoffen befrachtete Abwässer, enthaltend eine erste Abscheidekammer (3) für die Sinkstoffe, eine zweite, über eine Überfallwand (2) zugängliche Abscheidekammer (4) für Schwimmstoffe und ein von einer Pumpe (24) beaufschlagbares Umschaltventil (10) mit Verteilleitungen (8, 13) zum wahlweisen Wirbel- oder Spülbeaufschlagen der beiden Kammern (3, 4) und Entleeren des Kammerinhalts, wobei die Pumpe (24) saugseitig an einen beiden Kammer gemeinsamen und unter diesen befindlichen Schlammsumpf (16) angeschlossen ist, **dadurch gekennzeichnet** daß das Umschaltventil (10) zusammen mit allen Druck- Füll-, Entleer- und Verteilleitungsanschlüssen (8, 9, 9', 13) auf dem abnehmbaren Deckel (5) des Abscheidebehälters (1) montiert und so ausgebildet ist, daß es mit seiner Betätigung (11, 11') auf Rechts- oder Linkseinbau umschlagbar ist, und daß der Schlammsumpf (16) symmetrisch zur Längsachse des Behälters (1) so ausgebildet ist, daß die Pumpe (24) in jeweils um 90° gegeneinander versetzten Stellungen angeschlossen ist.

2. Abscheiderbehälter nach Anspruch 1, **dadurch gekennzeichnet**, daß die Verteilleitungsanschlüsse (8, 13) entgegengesetzt waagerecht zu den Kammern (3, 4) abgehen und die Betätigung (11) auf Links/Rechts-Stellung umschlagbar ist.

3. Abscheiderbehälter nach Anspruch 1 oder 2, **dadurch** gekennzeichnez, daß der Betätigung (11') die Pumpendruckleitung (9') gegenüberliegt.

4. Abscheiderbehälter nach Anspruch 3, **dadurch gekennzeichnet**, daß als Betätigung ein umschlagbares Winkelgetriebe (11) vorgesehen ist.

5. Abscheiderbehälter nach Anspruch 1 bis 4, **dadurch gekennzeichnet**, daß die Pumpendruckleitung (9) in einer Tasche (14) des Abscheiderbehälters (1) bis unterhalb des geneigten Kammerbodens (31) verläuft.

6. Abscheiderbehälter nach Anspruch 1, **dadurch gekennzeichnet**, daß das Druckrohr (9, 9') der Entleerungspumpe (10) waagerecht von dem Umschaltventil (10, 10') abgeht.

7. Abscheiderbehälter nach Anspruch 1 bis 6, **dadurch gekennzeichnet**, daß zwischen Sumpf (16) und Pumpe (24) ein Verschlußschieber (25) eingefügt ist, der von der Seite zu betätigen ist.

8. Abscheiderbehälter nach Anspruch 1, **dadurch gekennzeichnet**, daß der Sumpf 16 mittels eines Flansches (34) in vier um 90° zueinander versetzten Stellungen befestigbar ist.

9. Abscheiderbehälter nach Anspruch 1, **dadurch gekennzeichnet**, daß der Sumpf vier um jeweils 90° zueinander versetzte Anschlußstellungen für die Entleerungspumpe aufweist.

10. Abscheiderbehälter nach Anspruch 8 oder 9, **dadurch gekennzeichnet**, daß die Motor-Pumpen-Einheit (24) liegend am Sumpf (26) angeschlossen ist.

11. Abscheiderbehälter nach Anspruch 1, **dadurch gekennzeichnet**, daß die Füllleitung (20) bis in die Nähe der Auslauftauchwand (19) weitergezogen und mit mehreren Düsen (21, 22) zum Spülen der Auslauftauchwand (19) und der auslaufseitigen Behälterwand (23) versehen ist.

## Claims

1. Separator for waste water carrying solids and/or suspended matters, consisting of a first separation chamber (3) for the solids and a second separation chamber (4), which is accessible via an overflow baffle (2), for the suspended matters, as well as a diversion valve (10) with distribution pipes (8, 13) which is activated by a pump (24) alternatively for mixing or rinsing of the two chambers (3, 4) and for draining of the chamber contents, whereat the suction side of the pump (24) is connected to the common sludge sump (16) located underneath the two chambers, **characterized in that** the diversion valve (10) is mounted together with all pressure, filling, draining and distribution mains connections (8, 9, 9′, 13) to the removable cover (5) of the separator (1) and that its form is such that it can be adjusted, including its actuator (11, 11′), to a left or right hand assembly, and that the sludge sump (16) is symmetrical to the longitudinal axis of the tank (1) and the pump (24) is connected at positions which are displaced in each case by 90°.

2. Separator according to claim 1, **characterized in that** the distribution mains connections (8, 13) depart horizontally and in opposite directions to the chambers (3, 4) and the actuator (11) is reversible from left to right hand position.

3. Separator according to claim 1 or 2, **characterized in that** the actuator (11′) is facing the pump pressure pipe (9′).

4. Separator according to claim 3, **characterized in that** the intended actuator is a reversible angular gear (11).

5. Separator according to claim 1 to 4, **characterized in that** the pump pressure pipe (9) runs within a pocket (14) inside the separator (1) down below the inclined chamber bottom (31).

6. Separator according to claim 1, **characterized in that** the pressure pipe (9, 9′) of the draining pump (24) departs horizontally from the diversion valve (10, 10′).

7. Separator according to claim 1 to 6, **characterized in that** a slide valve (25) activated from the side, has been inserted between the sump (16) and the pump (24).

8. Separator according to claim 1, **characterized in that** the sump can be installed by means of a flange (34) at four positions displaced by 90° of each other.

9. Separator according to claim 1, **characterized in that** the sump is provided with four connections to the draining pump, which are displaced by 90° of each other.

10. Separator according to claim 8 or 9, **characterized in that** the pump-motor unit (24) is connected horizonntally to the sump (16).

11. Separator according to claim 1, **characterized in that** the filling pipe-line (20) extends almost to the effluent baffle (19) and that it is provided with several nozzles (21, 22) for rinsing of the effluent baffle (19) and the effluent side tank wall (23).


## Revendications

1. Séparateur pour des eaux usées chargées de matières solides et/ou des matières en suspension contenant une première chambre de séparation (3) pour les matières solides et une deuxième chambre de séparation (4), étant accessible par-dessus d'une paroi plongeuse (2), pour les matières en suspension et une vanne à trois voies (10) commandée par une pompe (24) pour les fonctions facultatives de circulation ou rinçage ainsi que de vidange du contenu des deux chambres (3, 4), le côté aspiration de la pompe (24) en étant raccordé au puisard d'aspiration (16) commun des deux chambres et situé en-dessous de celles-ci, **caractérisé en ce que** la vanne à trois voies (10) est montée conjointement avec tous les raccords pour la conduite forcée, le tuyau de remplissage, le tuyau de drainage et les branchements (8, 9, 9′, 13) sur le couvercle amovible (5) du séparateur (1) et construite de façon qu'elle peut être inversée pour une implantation soit à gauche soit à droite, et que le puisard d'aspiration (16) est symétrique à l'axe longitudinal du séparateur (1) et la pompe (24) est raccordée dans une des quatre positions étant déplacées l'une de l'autre par 90°.

2. Séparateur selon revendication 1, **caractérisé en ce que** les raccords des branchements (8, 13) sortent horizontalement, dans des directions opposées aux chambres (3, 4) et que l'organe de commande (11) est renversable de position gauche-droite.

3. Séparateur selon revendication 1 ou 2, **caractérisé en ce que** l'organe de commande (11′) est situé en face de la conduite forcée de la pompe (9′).

4. Séparateur selon revendication 3, **caractérisé en ce que** l'organe de commande prévu est un engrenage angulaire (11).

5. Séparateur selon revendication 1 jusqu'à 4, **caractérisé en ce que** la conduite forcée de la pompe (9) descend dans une poche (14) à l'intérieur du séparateur (1) jusqu'en bas du fond incliné (31).

6. Séparateur selon revendication 1, **caractérisé en ce que** la conduite forcée (9, 9′) de la pompe d'évacuation (24) sort horizontalement de la vanne à trois voies (10, 10′).

7. Séparateur selon revendication 1 jusqu'à 6, **caractérisé en ce que** une vanne d'arrêt (25), qui est commandée latéralement, est insérée entre le puisard d'aspiration (16) et la pompe (24).

8. Séparateur selon revendication 1, **caractérisé en ce que** le puisard d'aspiration (16) peut être fixé à l'intermédiaire d'une bride dans quatre positions étant déplacées par 90° l'un envers l'autre.

9. Séparateur selon revendication 1, **caractérisé en ce que** le puisard d'aspiration (16) est muni de quatre points de raccordement pour la pompe d'évacuation, qui sont déplacées par 90° l'un envers l'autre.

10. Séparateur selon revendication 8 ou 9, **caractérisé en ce que** l'unité moto-pompe (24) est raccordée horizontalement au puisard d'aspiration (16).

11. Séparateur selon revendication 1, **caractérisé en ce que** le tuyau de remplissage (20) s'étend jusqu'au devant la paroi plongeuse de sortie (19) et est équipé de plusieurs buses (21, 22) pour le rinçage de la paroi plongeuse de sortie (19) et la paroi de sortie (23) du séparateur.

Fig.1

Fig. 2